(19) **Europäisches Patentamt / European Patent Office / Office européen des brevets**

(11) **EP 3 462 407 B1**

(12) **EUROPEAN PATENT SPECIFICATION**

(45) Date of publication and mention
of the grant of the patent:
**28.10.2020 Bulletin 2020/44**

(51) Int Cl.:
***G06T 1/00*** *(2006.01)*

(21) Application number: **18186889.4**

(22) Date of filing: **01.08.2018**

(54) **METHOD AND DEVICE FOR GENERATING ASSOCIATED IMAGES AND VERIFYING THEM**

VERFAHREN UND VORRICHTUNG ZUR ERZEUGUNG ASSOZIIERTER BILDER UND ÜBERPRÜFUNG DAVON

PROCÉDÉ ET DISPOSITIF POUR GÉNÉRER DES IMAGES ASSOCIÉES ET LES VÉRIFIER

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.09.2017 CN 201710905603**

(43) Date of publication of application:
**03.04.2019 Bulletin 2019/14**

(73) Proprietor: **Nuctech Company Limited Beijing 100084 (CN)**

(72) Inventors:
• **CHEN, Zhiqiang**
  **BEIJING, 100084 (CN)**
• **LI, Yuanjing**
  **BEIJING, 100084 (CN)**
• **WU, Xianghao**
  **BEIJING, 100084 (CN)**

• **ZHAO, Shaozhi**
  **BEIJING, 100084 (CN)**

(74) Representative: **Cabinet Beau de Loménie 158, rue de l'Université 75340 Paris Cedex 07 (FR)**

(56) References cited:
**US-A1- 2004 201 751     US-A1- 2008 259 404**

• **ARUN ANOOP M: "Image forgery and its detection: A survey", 2015 INTERNATIONAL CONFERENCE ON INNOVATIONS IN INFORMATION, EMBEDDED AND COMMUNICATION SYSTEMS (ICIIECS), IEEE, 19 March 2015 (2015-03-19), pages 1-9, XP033192551, DOI: 10.1109/ICIIECS.2015.7193253 ISBN: 978-1-4799-6817-6 [retrieved on 2015-08-12]**

EP 3 462 407 B1

**Description**

**TECHNICAL FIELD**

Embodiments of the present disclosure relate to security of image files, and more particularly, to a method and device for generating associated images and a method and device for verifying associated images.

**BACKGROUND**

In a radiation image inspecting system, objects are scanned by a radiation imaging device to generate high-energy and low-energy images. Then, the high-energy and low-energy image data is transmitted to an image inspecting workstation, and analyzed by professional software therein, so as to determine whether any dangerous, or otherwise undesirable, object is enclosed or present.

In a security inspection device used for, for example, customs container cargo inspection, aviation security inspection, and non-destructive detection of large equipment, rays emitted by a X-ray source can penetrate enclosed compartments and enable the internal objects to be visualized, and are received by a detector at the other side. The absorbability of the rays is different due to different densities of different parts of the objects, and thus the intensity of signals output from the detectors is different. After performing image processing on signals of different intensity, the processed signals are displayed on the screen of a computer, which can clearly show the outline and shape of, for example, the objects inside a vehicle. Therefore, it is possible to know the objects in an enclosed compartment by simply viewing the display of the computer. As an example, in a large container inspecting system, when an image inspecting workstation acquires high-energy and low-energy images collected by the device, if someone copies pre-prepared images to the image library and replaces the actual images with the fake images, it may cause security problems with respect to the customs image inspecting service and bring losses to the customs security inspection.

Document US 2004/201751 A1 discloses a system that provides users of the system with a means for providing some assurance as to the origin of a digital photograph.

**SUMMARY**

In view of one or more problems in the prior art, there is proposed a device for generating associated images and a method thereof and an device for verifying associated images and a method thereof, which can improve security in the inspecting process of security inspection images.

In an aspect of the present disclosure, there is proposed a method of generating associated image files, comprising the steps of: scanning an object to be inspected, to obtain first image body data and second image body data that are associated with each other; creating a first image file based on the first image body data at a first time; generating a random time value; and generating a second image file associated with the first image file based on the second image body data at a second time, wherein the random time value is recorded in a file header of the second image file.

According to an embodiment of the present disclosure, the method further comprises the step of: calculating a parameter value representing a size of the first image body data and/or the second image body data, and determining a recording position of the random time value in the file header of the second image file based on the parameter value.

According to an embodiment of the present disclosure, the recording position is determined by the remainder after dividing the parameter value by a fixed value.

According to an embodiment of the present disclosure, the step of generating the random time value comprises: setting a random time threshold based on a service processing speed and a network speed; generating the random time value based on the random time threshold.

According to an embodiment of the present disclosure, the first image file and the second image file are generated for the same object to be inspected, and represent different physical properties of the object.

According to an embodiment of the present disclosure, the first image file and the second image file are specifically the following files of the object to be inspected: a high-energy image file and a low-energy image file; or a CT (Computed Tomography) image file and a DR (Digital Radiography) image file; or a material type image file and an attenuation coefficient image file; or a first angle-of-view image file and a second angle-of-view image file.

According to an embodiment of the present disclosure, the step of generating the random time value comprises: generating the random time value by utilizing a pseudo random number generator or a true random number generator.

In another aspect of the present disclosure, there is proposed a method of verifying associated image files, comprising the steps of: reading a first image file and a second image file; parsing a generation time of the first image file, a generation time of the second image file and a random time value from a file header of one of the first image file and the second image file; determining whether the first image file and the second image file are genuine based on the random time value and the difference between the generation time of the first image file and the generation time of the second image file.

According to an embodiment of the present disclosure, the first image file and the second image file are determined to be genuine (i.e. faithful representations of the originally-created files) if the difference between the generation time of the first image file and the generation time of the second image file equals to the random time value.

In still another aspect of the present disclosure, there is proposed an imaging device, comprising: a scanning apparatus configured to scan an object to be inspected to obtain first image body data and second image body data that are associated with each other; a processor configured to create a first image file based on the first image body data at a first time, to generate a random time value, and to generate a second image file associated with the first image file based on the second image body data at a second time, wherein the random time value is recorded in a file header of the second image file.

According to an embodiment of the present disclosure, the processor is further configured to calculate a parameter value representing a size of the first image body data and/or the second image body data, and to determine a recording position of the random time value in the file header of the second image file based on the parameter value.

According to an embodiment of the present disclosure, the processor is configured to determine the recording position by the remainder after dividing the parameter value by a fixed value.

According to an embodiment of the present disclosure, the processor is configured to set a random time threshold based on a service processing speed and a network speed, and to generate the random time value based on the random time threshold.

According to an embodiment of the present disclosure, the random time value is generated by utilizing a pseudo random number generator or a true random number generator.

In yet another aspect of the present disclosure, there is proposed an device for verifying associated image files, comprising: a memory, configured to store a plurality of image files; a processor, configured to read a first image file and a second image file, to parse a generation time of the first image file, a generation time of the second image file and a random time value from a file header of one of the first image file and the second image file, and to determine whether the first image file and the second image file are genuine based on the random time value and the difference between the generation time of the first image file and the generation time of the second image file.

According to an embodiment of the present disclosure, the processor is configured to determine that the first image file and the second image file are genuine if the difference between the generation time of the first image file and the generation time of the second image file equals to the random time value.

With the above-described technical scheme of the present disclosure, it is able to improve the security of the image inspecting process, and to determine whether actual security inspection images have been replaced with fake security inspection images.

## BRIEF DESCRIPTION OF THE DRAWINGS

In order to better understand the present invention, the present invention will be described in detail with reference to the following drawings, in which:

Fig. 1 illustrates a schematic structural diagram of a security inspection device according to an embodiment of the present disclosure;

Fig. 2 illustrates a schematic structural diagram of a computer apparatus in the security inspection device according to an embodiment of the present disclosure;

Fig. 3 illustrates a schematic flowchart of a method of generating associated security inspection images according to an embodiment of the present disclosure;

Fig. 4A illustrates a schematic structural diagram of an apparatus for generating a random time value according to an embodiment of the present disclosure;

Fig. 4B illustrates a schematic structural diagram of LFSR 401 in the apparatus shown in Fig. 4A;

Fig. 4C illustrates an example of a calculation function used in CASE 404 in the apparatus shown in Fig. 4A;

Fig. 5 illustrates a schematic structural diagram of another apparatus for generating a random time value according to an embodiment of the present disclosure;

Fig. 6 illustrates an example of generating a random position for writing a time value into a file header of an image file according to an embodiment of the present disclosure;

Fig. 7 illustrates a schematic flowchart of a method of verifying associated images according to an embodiment of the present disclosure.

**DETAILED DESCRIPTION**

The specific embodiments of the present invention will be described in detail below. It should be noted that the embodiments herein are used for illustration only, without limiting the present invention. In the description below, a number of specific details are explained to provide better understanding of the present invention. However, it is apparent to those skilled in the art that the present invention can be implemented without these specific details. In other instances, well known circuits, materials or methods are not described specifically so as not to obscure the present invention.

Throughout the specification, the reference to "one embodiment," "an embodiment," "one example" or "an example" means that the specific features, structures or properties described in conjunction with the embodiment or example are included in at least one embodiment of the present invention. Therefore, the phrases "in one embodiment," "in an embodiment," "in one example" or "in an example" occurred in various positions throughout the specification may not necessarily refer to the same embodiment or example. Furthermore, specific features, structures or properties may be combined into one or more embodiments or examples in any appropriate combination and/or sub-combination. Moreover, it should be understood by those skilled in the art that the term "and/or" used herein means any and all combinations of one or more listed items.

In view of one or more problems in the prior art, there is proposed a device for generating associated images and a method thereof and a device for verifying associated images and a method thereof. According to an embodiment of the present disclosure, an object to be inspected is scanned by, for example, a dual energy X-ray scanning device, to obtain first image body data (e.g., high-energy data) and second image body data (e.g., low-energy data) associated with each other. A first image file is created based on the first image body data at a first time and a random time value is generated. A second image file associated with the first image file is generated based on the second image body data at a second time after the random time value, wherein the random time value is recorded in a file header of the second image file. Thus, in the image verifying phase, the image can be verified based on the generation time of the image file and the random time value recorded in the file header. As an example, the first image file and the second image file are read, and the generation time of the first image file, the generation time of the second image file and the random time value are parsed from the file header of one of the first image file and the second image file. Then, it is determined whether the first image file and the second image file are genuine based on the random time value and the difference between the generation time of the first image file and the generation time of the second image file. Such approach can verify the first image file and second image file associated with each other, thereby improving the security of the security inspection device.

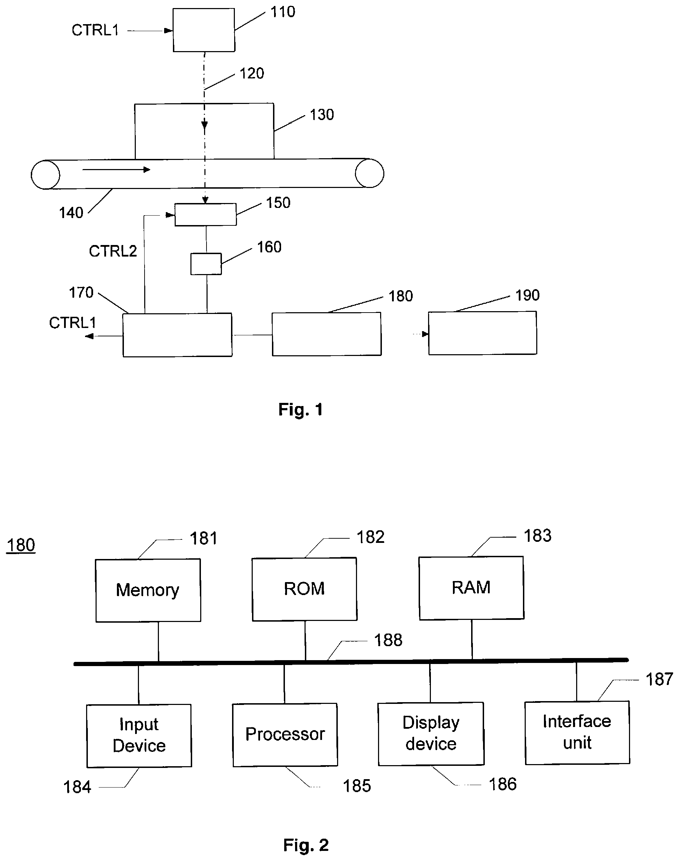

Fig. 1 illustrates a schematic structural diagram of a security inspection device according to an embodiment of the present disclosure. The security inspection device shown in Fig. 1 includes a carrying (conveying) mechanism 140 which moves and carries an object 130 to be inspected, such as a belt or the like, an X-ray source 110, a detector module 150, an acquisition circuit 160, a controller 170, a data processing computer 180, and an image inspecting workstation 190 or the like. The ray source 110 includes an X-ray generator such as an X-ray machine or an electron linear accelerator, which generates an X-ray beam to scan the object 130 to be inspected. In the above embodiment, the X-ray source 110 generates high-energy and low-energy X-rays in a switching mode, and scans the object to be inspected with the high-energy and low-energy X-rays.

As shown in Fig. 1, the carrying mechanism 140 passes through a scanning zone between the X-ray source 110 and the detector 150 with the object 130 to be inspected being carried thereon. In some embodiments, the detector 150 and the acquisition circuit 160 are, for example, detectors and data acquisition devices having an integral modular structure, such as multiple rows of detectors, for detecting the X-rays penetrating the object to be inspected, to obtain an analog signal, and converting the analog signal into a digital signal so as to output radiation data of the object to be inspected with respect to X-rays. The controller 170 is coupled to the X-ray source 110, the detector module 150, and the acquisition circuit 160, and may control various portions of the overall system to operate synchronously. The data processing computer 180 may process the data acquired by the acquisition circuit, reconstruct the data, and output a result.

According to this embodiment, the detector 150 and the acquisition circuit 160 are coupled to each other to obtain the radiation data of the object 130 to be inspected. The acquisition circuit 160 includes a data amplifying and shaping circuit which operates in either (current) integration mode or pulse (counting) mode. The acquisition circuit 160 is coupled to the controller 170 and the data processing computer 180 via its data output cable, and stores the acquired data in the data processing computer 180 according to a trigger command.

In some embodiments, the detector module 150 includes a plurality of detecting units which receive X-rays penetrating the object to be inspected. The data acquisition circuit 160 and the detector module 150 are coupled to each other to convert signals generated by the detector module 150 into detection data. The controller 170 is connected to the X-ray source 110 via a control line CTRL1, connected to the detector module 150 via a control line CTRL2, and connected to the data acquisition circuit 160. The controller 170 may control at least two X-ray generators of a plurality of X-ray generators in the X-ray source to generate high-energy and low-energy X-rays alternatively, which penetrate the object to be inspected as the object to be inspected moves. Furthermore, the controller 170 may control the detector module 150 and the data acquisition circuit 160 to obtain detection data corresponding to the at least two X-ray generators, respectively. The data processing computer 180 may reconstruct images, of the object to be inspected, of at least two energies based on the detection data.

The obtained radiation images are transmitted to the image inspecting workstation 190 in a wired or wireless manner. The images generated by scanning are manually inspected at the image inspecting workstation 190, so as to determine whether the object to be inspected is an undesired object, e.g. a dangerous object or an illegal object.

Fig. 2 illustrates a structural block diagram of the data processing computer 180 shown in Fig. 1. As shown in Fig. 2, the data acquired by the acquisition circuit 160 is stored in a memory 181 via an interface unit 187 and a bus 188. Configuration information and programs of the data processing computer are stored in a read only memory (ROM) 182. A random access memory (RAM) 183 may temporarily store various data during the operation of a processor 185. In addition, a computer program for performing data processing is also stored in the memory 181. An internal bus 188 is connected to the memory 181, read only memory 182, random access memory 183, input device 184, processor 185, display device 186, and interface unit 187 described above.

After an operation command is input by an user via the input device 184 such as a keyboard and a mouse, the instruction code of the computer program commands the processor 185 to execute a predetermined data reconstruction algorithm, and to display a data processing result on the display device 186 (such as an LCD display), or to output the processing result in the way of hard copying such as printing directly.

Although it is shown in Fig. 1 that the object 130 to be inspected is X-ray scanned, it will be understood by those skilled in the art that, when the carrying mechanism 140 rotates or the X-ray source 110 and the detector 150 rotates around the object to be inspected, a dual energy CT scanning on the object to be inspected may be realized, and thus high-energy and low-energy CT images associated with each other may be obtained. It will be appreciated by those skilled in the art that, in other embodiments, two images associated with each other, for example, images of different angles-of-view of the same object (such as a first angle-of-view image and a second angle-of-view image), a CT image and a DR image, or a material type image and an attenuation coefficient image of an object to be inspected or the like, may be generated for security inspection.

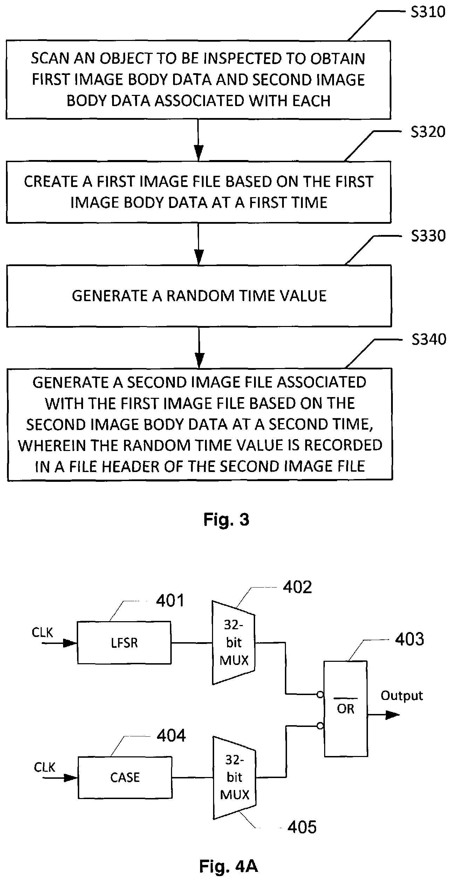

Fig. 3 illustrates a schematic flowchart of a method of generating associated security inspection images according to an embodiment of the present disclosure. As shown in Fig. 3, in an embodiment of the present disclosure, images are stored in the memory 183, and a non-constant time difference among a plurality of images is generated by a random delay processing mechanism. The time difference is stored in an image file (such as a low-energy image). When image processing is performed at a service site (for example, the image inspecting station 190), the time difference information obtained from the images may be used to conduct verification, so as to determine whether the images in the image inspecting workstation 190 have been tampered with.

Referring to Fig. 3, in step S310, an object 130 to be inspected may be scanned by a security inspection device, to obtain first image body data and second image body data which are associated with each other, for example, high-energy data and low-energy data. It should be noted that, however, no image file has been generated yet at that time.

Then, in step S320, a first image file is created based on the first image body data at a first time. As an example, in the case where the image body data is known, the image file is generated in a desired format in which the image body data described above is filled in the image body portion, and related attribute data (for example, generation time) is filled in the image header portion, and the like.

In step S330, a random time value is generated. In step S340, a second image file associated with the first image file is generated based on the second image body data at a second time, wherein the random time value is recorded in the file header of the second image file.

As an example, immediately after generating high-energy and low-energy image data of the object 130 to be inspected by the security inspection device, any one of a high-energy image file or a low-energy image file, for example, the high-energy image file (named A), is generated in the system image library, and TIME(Create A) is stored in the file header. The other image file, for example, the low-energy image file (named B), is not generated immediately, but is temporarily stored in a memory. In the present embodiment, the system sets a random time threshold based on the service processing speed and the network speed in the deployment environment, and generates a random time value (TRandom) by utilizing a random time generator. The system waits until a time period specified by the random time value has elapsed. Then the image file B is generated and written into a disk. Simultaneously, the time period specified by the random time value and the generation time of the image file B are recorded in the file header of the image file B.

The threshold is used to control the range of the generated random time value. For example, if the threshold is set to 2 seconds, the randomly generated time value should be in the range of 0 to 2 seconds.

The above random time value can be generated by software or by hardware. The manner in which the random time value is generated is not particularly limited in embodiments of the present disclosure. For example, in the case where a pseudo-random number is generated by the software, Rand() Function in C language can be called to generate the pseudo-random number.

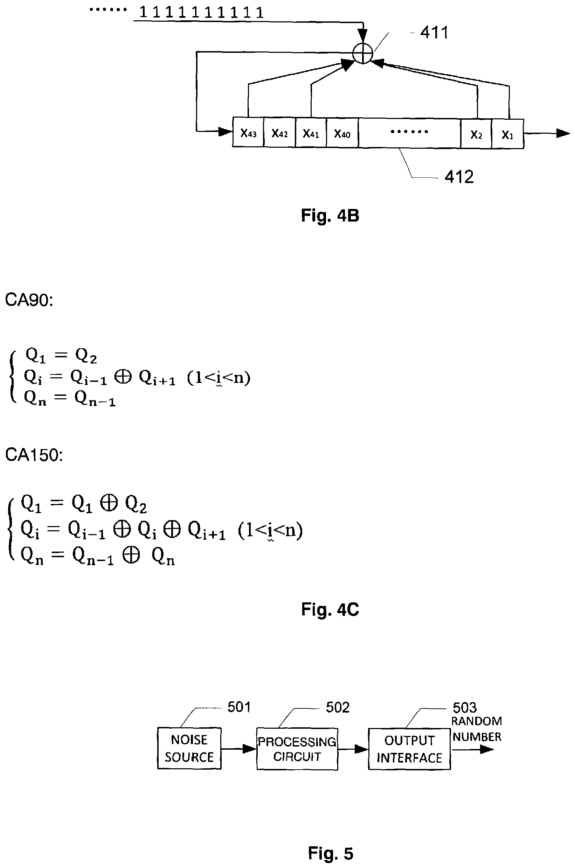

Fig. 4A illustrates a schematic structural diagram of an apparatus for generating a random time value according to an embodiment of the present disclosure. Fig. 4B illustrates a schematic structural diagram of LFSR 401 in the apparatus shown in Fig. 4A. Fig. 4C illustrates an example of a calculation function used in CASE 404 in the apparatus shown in Fig. 4A.

Fig. 4A illustrates the generation of a pseudo random number by means of a combination of a linear feedback shift register (LFSR) 401 and a cellular automata shift register (CASE) 404. The random number generator shown in Fig. 4A includes the linear feedback shift register (LFSR) 401, the cellular automata shift register 404, two 32-bit multiplexers 402 and 405, and an exclusive OR gate 403. As shown in Fig. 4A, the linear feedback shift register 401 receives a clock signal at its input, and transmits a first output signal from the output of the LFSR 401 to the input of the multiplexer 402. A first multiplexed signal is generated at the output of the multiplexer 402.

The cellular automata shift register 404 receives a clock signal and transmits a second output signal from the output of the cellular automata shift register 404 to the input of the multiplexer 405. A second multiplexed signal is generated at the output of the multiplexer 405. The respective outputs of multiplexers 402 and 405 are coupled to two inputs of the XOR gate 403, respectively, and a pseudo random number is generated at the output of the XOR gate 403.

As shown in Fig. 4B, the LFSR 401 may be a 43-bit LFSR and may consist of two parts, a 43-bit shift register 412 and a feedback unit 411. The feedback unit 411 generates one new bit to add into the bit stream by calculating the input bit sequence, so that all bits of the bit stream are shifted to the right by one bit simultaneously. As a result, the rightmost bit is the output result. In the example of Fig.4B, the feedback function employed by the feedback unit is as follows:

$$NewBit = x_{43} \oplus x_{41} \oplus x_{20} \oplus x_1 \oplus 1$$

wherein the maximum cycle period according to the calculation is:

$$MAX\_CYCLE\_LENGTH = 2^{43} - 1$$

The CASE 404 may be a 37-bit CASE (Cellular Automata Shift Register), for example, which calculates each bit of the bit sequence by a calculation function unit, inserts the calculated new bit at the leftmost end of the bit sequence to have all bits of the bit stream shift to the right. As a result, the bit being shifted out is the output bit. The calculation functions used by the 37-bit cellular automata pseudo-random generator herein may be CA90 and CA150, as shown in Fig. 4C.

Fig. 5 illustrates a schematic structural diagram of another apparatus for generating a random time value according to an embodiment of the present disclosure. As shown in Fig. 5, a schematic structural diagram of a physical true random number generator (PTRNG) is provided. Physical random number generators are based on the random characteristics of physical phenomena in nature, for example, molecular motion, decay of elements, thermal noise of resistors and diodes. For the PTRNG, there is no initial sequence or seed, and no algorithm can predetermine what is to be output next. During the operation of the PTRNG system according to one embodiment of the apparatus of Fig.5, an analog thermal noise signal is generated by a noise source 501 first. A processing circuit 502 includes, for example, a sampling circuit and an A/D converter, configured to convert the thermal noise signal into a digital signal, or the like. Then, the digital signal is output to the data processing computer 180 via an output interface 503, thereby resulting in random numbers that are more uniform in distribution and relatively independent of one another.

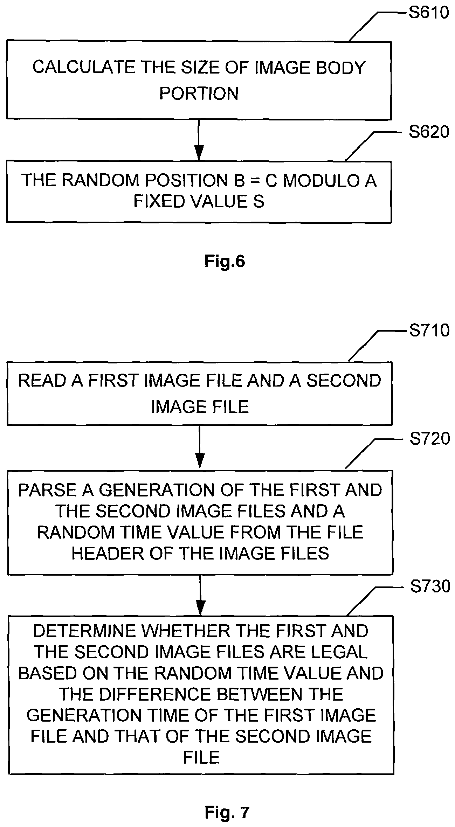

According to other embodiments, when a time parameter generated by a random time generator is added to a file header of a low-energy image file, the byte code may not be written at a fixed position, but may be written at a random position instead, for example, at a random position B of the file header of the image file. The method of determining the random position can be performed as shown in Fig. 6 below.

Fig. 6 illustrates a schematic structural diagram of an apparatus for generating a random position value according to an embodiment of the present disclosure. As shown in Fig. 6, the size C of an image body portion is calculated in step S610. For example, the size of the high-energy image body or the size of the low-energy image body is calculated. Then, in step S620, the random position B of the random time value in the file header is calculated by the remainder after dividing the calculated size C of the image body by a fixed value S. Those skilled in the art will understand that other ways of determining the position of the random time value in the file header may be employed.

Fig. 7 illustrates a schematic flowchart of a method of verifying (validating) associated images according to an embodiment of the present disclosure. In the embodiment shown in Fig. 7, after entering the image verification process, it is determined whether the entire image (including the high-energy image and the low-energy image) is genuine (valid) based on the time when the second image was generated by the radiation imaging device, the generation time TIME (Create A) stored in the first image, and the time period TIME PERIOD (random) (being read at the header of the image file B) stored in the second image (for example, the low-energy image file B).

The determination formula for the generation time of the image B is as follows:

$$TIME(Create\ B) = TIME(Create\ A) + TIME\ PERIOD(random)$$

If the above determination formula is not satisfied, the system will determine that associated images are not genuine, and an alarm signal will be issued.

With the above embodiments, it is able to bring great benefits to the robustness of the customs image inspecting service, to prevent the replacement of actual images with fake images, and to improve the security level of customs security inspection. The same method can also be applied in other fields to conduct a verification of relevancy according to the relevance of objects/events in the field. More particularly, independent entities are placed in a system with associated attributes, and then it may be determined whether the entities are genuine and valid according to the associated attributes of the system.

Moreover, although the above description is directed to high-energy and low-energy images, those skilled in the art will appreciate that two images generated by performing radiation imaging on the same object can be used as associated images. Furthermore, although Radiography imaging is described above, those skilled in the art will appreciate that, images of the object to be inspected may also be generated by means of other rays radiated by, for example, neutrons, protons, electrons, muons, heavy ions, and the like.

The foregoing detailed description has set forth various embodiments of a device for generating associated images and a method thereof and a device for verifying associated images and a method thereof via the use of diagrams, flowcharts, and/or examples. In a case that such diagrams, flowcharts, and/or examples contain one or more functions and/or operations, it will be understood by those skilled in the art that each function and/or operation within such diagrams, flowcharts or examples may be implemented, individually and/or collectively, by a wide range of structures, hardware, software, firmware, or virtually any combination thereof. In one embodiment, several portions of the subject matter described in the embodiments of the present invention may be implemented via Application Specific Integrated Circuits (ASICs), Field Programmable Gate Arrays (FPGAs), Digital Signal Processors (DSPs), or other integrated formats. However, those skilled in the art will recognize that some aspects of the embodiments disclosed herein, in whole or in part, may be equivalently implemented in integrated circuits, as one or more computer programs running on one or more computers (e.g., as one or more programs running on one or more computer systems), as one or more programs running on one or more processors (e.g., as one or more programs running on one or more microprocessors), as firmware, or as virtually any combination thereof, and that designing the circuitry and/or writing the code for the software and/or firmware would be well within the skill of those skilled in the art in ray of this disclosure. In addition, those skilled in the art will appreciate that the mechanisms of the subject matter described herein are capable of being distributed as a program product in a variety of forms, and that an illustrative embodiment of the subject matter described herein applies regardless of the particular type of signal bearing medium used to actually carry out the distribution. Examples of a signal bearing medium include, but are not limited to, the following: a recordable type medium such as a floppy disk, a hard disk drive, a Compact Disc (CD), a Digital Versatile Disk (DVD), a digital tape, a computer memory, etc.; and a transmission type medium such as a digital and/or an analog communication medium (e.g., a fiber optic cable, a waveguide, a wired communications link, a wireless communication link, etc.).

While the present invention has been described with reference to several typical embodiments, it is apparent to those skilled in the art that the terms are used for illustration and explanation purpose and not for limitation. It should be understood that the embodiments are not limited to any of the foregoing details, and shall be interpreted broadly within the scope as defined by the following claims.

**Claims**

1. A method of generating associated image files, so that their genuineness can be verified, comprising:

scanning an object to be inspected to obtain first image raw data and second image raw data that are associated with each other;

creating a first image file based on the first image raw data at a first time, wherein the first time is recorded in a file header of the first image file;

generating a random time value; and

generating a second image file associated with the first image file based on the second image raw data at a second time which is later than the first time by the random time value, wherein the second time and the random time value are recorded in a file header of the second image file.

2. The method of claim 1, further comprising:

calculating a parameter value representing a size of the first image raw data and/or the second image raw data, and

determining a recording position of the random time value in the file header of the second image file based on the parameter value.

3. The method of claim 2, wherein the recording position is determined by the remainder after dividing the parameter value by a fixed value.

4. The method of claim 1, wherein the generating a random time value comprises:

setting a random time threshold based on a service processing speed and a network speed;

generating the random time value based on the random time threshold.

5. The method of any one of claims 1 to 4, wherein the first image file and the second image file are generated for the same object to be inspected, and represent different physical properties of the object, respectively; and wherein the first image file and the second image file are the following files of the object to be inspected:

a high-energy image file and a low-energy image file; or

a CT image file and a DR image file; or

a material type image file and an attenuation coefficient image file; or

a first angle-of-view image file and a second angle-of-view image file.

6. The method of claim 1, wherein the generating a random time value comprises:
generating the random time value by utilizing a pseudo random number generator or a true random number generator.

7. A method of verifying associated image files, comprising the steps of:

reading a first image file comprising a header including a generation time of the first image file and a second image file comprising a header including a generation time of the second image file and a random time value;

parsing the generation time of the first image file from the header of the first image file, the generation time of the second image file and the random time value from the header of the second image file;

determining whether the first image file and the second image file are genuine based on the random time value and the difference between the generation time of the first image file and the generation time of the second image file.

8. The method of claim 7, wherein the first image file and the second image file are determined to be genuine if the difference between the generation time of the first image file and the generation time of the second image file equals to the random time value.

9. The method of any one of claims 7-8, wherein the first image file and the second image file are generated for the same object to be inspected, and represent different physical properties of the object; and wherein the first image file and the second image file are the following files of the object to be inspected:

a high-energy image file and a low-energy image file; or

a CT image file and a DR image file; or

a material type image file and an attenuation coefficient image file; or

a first angle-of-view image file and a second angle-of-view image file.

**10.** An imaging device, comprising:

a scanning apparatus configured to scan an object to be inspected to obtain first image raw data and second image raw data that are associated with each other;
a processor configured to:

create a first image file based on the first image raw data at a first time, wherein the first time is recorded in a file header of the first image file;
generate a random time value; and
generate a second image file associated with the first image file based on the second image raw data at a second time which is later than the first time by the random time value, wherein the second time and the random time value are recorded in a file header of the second image file.

**11.** The imaging device of claim 10, wherein the processor is further configured to:
calculate a parameter value representing a size of the first image raw data and/or the second image raw data, and determine a recording position of the random time value in the file header of the second image file based on the parameter value.

**12.** The imaging device according to claim 11, wherein the processor is configured to determine the recording position by the remainder after dividing the parameter value by a fixed value.

**13.** The imaging device of claim 10, wherein the processor is configured to:

set a random time threshold based on a service processing speed and a network speed;
generate the random time value based on the random time threshold.

**14.** The imaging device of any one of claims 10 to 13, wherein the first image file and the second image file are generated for the same object to be inspected, and represent different physical properties of the object, respectively; and wherein the first image file and the second image file are the following files of the object to be inspected:

a high-energy image file and a low-energy image file; or
a CT image file and a DR image file; or
a material type image file and an attenuation coefficient image file; or
a first angle-of-view image file and a second angle-of-view image file.

**15.** The imaging device of claim 10, wherein the random time value is generated by utilizing a pseudo random number generator or a true random number generator.

**Patentansprüche**

**1.** Verfahren zum Erzeugen zugeordneter Bilddateien, umfassend:

Scannen eines zu untersuchenden Objekts, um erste Bildrohdaten und zweite Bildrohdaten zu erhalten, die einander zugeordnet sind,
Erzeugen einer ersten Bilddatei auf der Grundlage der ersten Bildrohdaten zu einem ersten Zeitpunkt, wobei der erste Zeitpunkt in einem Datei-Header der ersten Bilddatei aufgezeichnet wird,
Erzeugen eines zufälligen Zeitwerts und
Erzeugen einer zweiten Bilddatei, die der ersten Bilddatei zugeordnet ist, auf der Grundlage der zweiten Bildrohdaten zu einem zweiten Zeitpunkt, der um den zufälligen Zeitwert später als der erste Zeitpunkt liegt, wobei der zweite Zeitpunkt und der zufälligen Zeitwert in einem Datei-Header der zweiten Bilddatei aufgezeichnet werden.

**2.** Verfahren nach Anspruch 1, ferner umfassend:

Berechnen eines Parameterwertes, der eine Größe der ersten Bildrohdaten und/oder der zweiten Bildrohdaten darstellt, und
Bestimmen einer Aufzeichnungsposition des zufälligen Zeitwerts im Datei-Header der zweiten Bilddatei auf der Grundlage des Parameterwerts.

3. Verfahren nach Anspruch 2, wobei die Aufzeichnungsposition durch den Rest nach Division des Parameterwertes durch einen festen Wert bestimmt wird.

4. Verfahren nach Anspruch 1, wobei das Erzeugen eines zufälligen Zeitwerts umfasst:

   Festlegen eines zufälligen Zeitschwellenwertes auf der Grundlage einer Dienstverarbeitungsgeschwindigkeit und einer Netzgeschwindigkeit und
   Erzeugen des zufälligen Zeitwertes auf der Grundlage des zufälligen Zeitschwellenwerts.

5. Verfahren nach einem der Ansprüche 1 bis 4, wobei die erste Bilddatei und die zweite Bilddatei für dasselbe zu untersuchende Objekt erzeugt werden und jeweils unterschiedliche physikalische Eigenschaften des Objekts darstellen und
   wobei die erste Bilddatei und die zweite Bilddatei die folgenden Dateien des zu untersuchenden Objekts sind:

   eine Hochenergie-Bilddatei und eine Niedrigenergie-Bilddatei oder
   eine CT-Bilddatei und eine DR-Bilddatei oder
   eine Materialtyp-Bilddatei und eine Abschwächungskoeffizienten-Bilddatei oder
   eine Bilddatei aus einem ersten Blickwinkel und eine Bilddatei aus einem zweiten Blickwinkel.

6. Verfahren nach Anspruch 1, wobei das Erzeugen eines zufälligen Zeitwerts umfasst:
   Erzeugen des zufälligen Zeitwerts durch Verwendung eines Pseudozufallszahlengenerators oder eines echten Zufallszahlengenerators.

7. Verfahren zum Verifizieren zugeordneter Bilddateien, umfassend die Schritte des:

   Lesens einer ersten Bilddatei mit einem Header, der einen Zeitpunkt der Erzeugung der ersten Bilddatei enthält, und einer zweiten Bilddatei mit einem Header, der eine Zeitpunkt der Erzeugung der zweiten Bilddatei und einen zufälligen Zeitwert enthält,
   Parsen des Zeitpunkts der Erzeugung der ersten Bilddatei aus dem Header der ersten Bilddatei, des Zeitpunkts der Erzeugung der zweiten Bilddatei und des zufälligen Zeitwertes aus dem Header der zweiten Bilddatei,
   Bestimmen, ob die erste Bilddatei und die zweite Bilddatei echt sind, basierend auf dem zufälligen Zeitwert und der Differenz zwischen dem Zeitpunkt der Erzeugung der ersten Bilddatei und dem Zeitpunkt der Erzeugung der zweiten Bilddatei.

8. Verfahren nach Anspruch 7, wobei die erste Bilddatei und die zweite Bilddatei als echt bestimmt werden, wenn die Differenz zwischen dem Zeitpunkt der Erzeugung der ersten Bilddatei und dem Zeitpunkt der Erzeugung der zweiten Bilddatei gleich dem zufälligen Zeitwert ist.

9. Verfahren nach einem der Ansprüche 7 oder 8,
   wobei die erste Bilddatei und die zweite Bilddatei für dasselbe zu untersuchende Objekt erzeugt werden und unterschiedliche physikalische Eigenschaften des Objekts darstellen und
   wobei die erste Bilddatei und die zweite Bilddatei die folgenden Dateien des zu untersuchenden Objekts sind:

   eine Hochenergie-Bilddatei und eine Niedrigenergie-Bilddatei oder
   eine CT-Bilddatei und eine DR-Bilddatei oder
   eine Materialtyp-Bilddatei und eine Abschwächungskoeffizienten-Bilddatei oder
   eine Bilddatei aus einem ersten Blickwinkel und eine Bilddatei aus einem zweiten Blickwinkel.

10. Bildgebende Vorrichtung, umfassend:

    eine Abtastvorrichtung, die dazu konfiguriert ist, ein zu untersuchendes Objekt abzutasten, um erste Bildrohdaten und zweite Bildrohdaten zu erhalten, die einander zugeordnet sind,
    einen Prozessor, der dazu konfiguriert ist:

    eine erste Bilddatei auf der Grundlage der ersten Bildrohdaten zu einem ersten Zeitpunkt zu erzeugen, wobei der erste Zeitpunkt in einem Datei-Header der ersten Bilddatei aufgezeichnet wird,

einen zufälligen Zeitwert zu erzeugen und

eine zweite Bilddatei, die der ersten Bilddatei zugeordnet ist, auf der Grundlage der zweiten Bildrohdaten zu einem zweiten Zeitpunkt zu erzeugen, der um den zufälligen Zeitwert später als der erste Zeitpunkt liegt, wobei der zweite Zeitpunkt und der zufälligen Zeitwert in einem Datei-Header der zweiten Bilddatei aufgezeichnet werden.

11. Bildgebende Vorrichtung nach Anspruch 10, wobei der Prozessor ferner dazu konfiguriert ist, einen Parameterwert zu berechnen, der eine Größe der ersten Bildrohdaten und/oder der zweiten Bildrohdaten repräsentiert, und eine Aufzeichnungsposition des zufälligen Zeitwerts im Datei-Header der zweiten Bilddatei auf der Grundlage des Parameterwerts zu bestimmen.

12. Bildgebende Vorrichtung nach Anspruch 11, wobei der Prozessor dazu konfiguriert ist, die Aufzeichnungsposition durch den Rest nach Division des Parameterwertes durch einen festen Wert zu bestimmen.

13. Bildgebende Vorrichtung nach Anspruch 10, wobei der Prozessor dazu konfiguriert ist:

einen zufälligen Zeitschwellenwert auf der Grundlage einer Dienstverarbeitungsgeschwindigkeit und einer Netzgeschwindigkeit festzulegen und
den zufälligen Zeitwert basierend auf dem zufälligen Zeitschwellenwert zu erzeugen.

14. Bildgebende Vorrichtung nach einem der Ansprüche 10 bis 13, wobei die erste Bilddatei und die zweite Bilddatei für dasselbe zu untersuchende Objekt erzeugt werden und jeweils unterschiedliche physikalische Eigenschaften des Objekts darstellen und
wobei die erste Bilddatei und die zweite Bilddatei die folgenden Dateien des zu untersuchenden Objekts sind:

eine Hochenergie-Bilddatei und eine Niedrigenergie-Bilddatei oder
eine CT-Bilddatei und eine DR-Bilddatei oder
eine Materialtyp-Bilddatei und eine Abschwächungskoeffizienten-Bilddatei oder
eine Bilddatei aus einem ersten Blickwinkel und eine Bilddatei aus einem zweiten Blickwinkel.

15. Bildgebende Vorrichtung nach Anspruch 10, wobei der zufällige Zeitwert unter Verwendung eines Pseudozufallszahlengenerators oder eines echten Zufallszahlengenerators erzeugt wird.

**Revendications**

1. Procédé de génération de fichiers d'images associés, de sorte que leur authenticité puisse être vérifiée, comprenant :

le balayage d'un objet à inspecter afin d'obtenir des premières données brutes d'image et des secondes données brutes d'image qui sont associées les unes aux autres ;
la création d'un premier fichier d'image sur la base des premières données brutes d'image à un premier moment, dans lequel le premier moment est enregistré dans un en-tête de fichier du premier fichier d'image ;
la génération d'une valeur de temps aléatoire ; et
la génération d'un second fichier d'image associé au premier fichier d'image sur la base des secondes données brutes d'image à un second moment qui est ultérieur au premier moment selon la valeur de temps aléatoire, dans lequel le second moment et la valeur de temps aléatoire sont enregistrés dans un en-tête de fichier du second fichier d'image.

2. Procédé selon la revendication 1, comprenant en outre :

le calcul d'une valeur de paramètre qui représente une taille des premières données brutes d'image et/ou des secondes données brutes d'image, et
la détermination d'une position d'enregistrement de la valeur de temps aléatoire dans l'en-tête de fichier du second fichier d'image sur la base de la valeur de paramètre.

3. Procédé selon la revendication 2, dans lequel la position d'enregistrement est déterminée par le reste après avoir divisé la valeur de paramètre par une valeur fixe.

**4.** Procédé selon la revendication 1, dans lequel la génération d'une valeur de temps aléatoire comprend :

la définition d'un seuil de temps aléatoire sur la base d'une vitesse de traitement de service et d'une vitesse de réseau ;
la génération de la valeur de temps aléatoire sur la base du seuil de temps aléatoire.

**5.** Procédé selon l'une quelconque des revendications 1 à 4, dans lequel le premier fichier d'image et le second fichier d'image sont générés pour le même objet à inspecter, et représentent différentes propriétés physiques de l'objet, respectivement ; et
dans lequel le premier fichier d'image et le second fichier d'image sont les fichiers suivants de l'objet à inspecter :

un fichier d'image à haute énergie et un fichier d'image à faible énergie ; ou
un fichier d'image CT et un fichier d'image DR ; ou
un fichier d'image de type de matériau et un fichier d'image de coefficient d'atténuation ; ou
un fichier d'image de premier angle de vue et un fichier d'image de second angle de vue.

**6.** Procédé selon la revendication 1, dans lequel la génération d'une valeur de temps aléatoire comprend :
la génération de la valeur de temps aléatoire en utilisant un générateur de pseudo nombre aléatoire ou un générateur de véritable nombre aléatoire.

**7.** Procédé de vérification de fichiers d'images associés, comprenant les étapes consistant à :

lire un premier fichier d'image comprenant un en-tête qui comprend un moment de génération du premier fichier d'image et un second fichier d'image comprenant un en-tête qui comprend un moment de génération du second fichier d'image et une valeur de temps aléatoire ;
l'analyse du moment de génération du premier fichier d'image à partir de l'en-tête du premier fichier d'image, du moment de génération du second fichier d'image et de la valeur de temps aléatoire à partir de l'en-tête du second fichier d'image ;
la détermination du fait que le premier fichier d'image et le second fichier d'image soient authentiques ou non sur la base de la valeur de temps aléatoire et de la différence entre le moment de génération du premier fichier d'image et le moment de génération du second fichier d'image.

**8.** Procédé selon la revendication 7, dans lequel le premier fichier d'image et le second fichier d'image sont déterminés comme étant authentiques si la différence entre le moment de génération du premier fichier d'image et le moment de génération du second fichier d'image est égale à la valeur de temps aléatoire.

**9.** Procédé selon l'une quelconque des revendications 7 à 8, dans lequel le premier fichier d'image et le second fichier d'image sont générés pour le même objet à inspecter, et représentent différentes propriétés physiques de l'objet ; et
dans lequel le premier fichier d'image et le second fichier d'image sont les fichiers suivants de l'objet à inspecter :

un fichier d'image à haute énergie et un fichier d'image à faible énergie ; ou
un fichier d'image CT et un fichier d'image DR ; ou
un fichier d'image de type de matériau et un fichier d'image de coefficient d'atténuation ; ou
un fichier d'image de premier angle de vue et un fichier d'image de second angle de vue.

**10.** Dispositif d'imagerie, comprenant :

un appareil de balayage configuré pour balayer un objet à inspecter afin d'obtenir des premières données brutes d'image et des secondes données brutes d'image qui sont associées les unes aux autres ;
un processeur configuré pour :

créer un premier fichier d'image sur la base des premières données brutes d'images à un premier moment, dans lequel le premier moment est enregistré dans un en-tête de fichier du premier fichier d'image ;
générer une valeur de temps aléatoire ; et
générer un second fichier d'image associé au premier fichier d'image sur la base des secondes données brutes d'image à un second moment qui est ultérieur au premier moment selon la valeur de temps aléatoire, dans lequel le second moment et la valeur de temps aléatoire sont enregistrés dans un en-tête de fichier du second fichier d'image.

**11.** Dispositif d'imagerie selon la revendication 10, dans lequel le processeur est en outre configuré pour : calculer une valeur de paramètre qui représente une taille des premières données brutes d'image et/ou des secondes données brutes d'image, et déterminer une position d'enregistrement de la valeur de temps aléatoire dans l'en-tête de fichier du second fichier d'image sur la base de la valeur de paramètre.

**12.** Dispositif d'imagerie selon la revendication 11, dans lequel le processeur est configuré pour déterminer la position d'enregistrement par le reste après avoir divisé la valeur de paramètre par une valeur fixe.

**13.** Dispositif d'imagerie selon la revendication 10, dans lequel le processeur est configuré pour :

définir un seuil de temps aléatoire sur la base d'une vitesse de traitement de service et d'une vitesse de réseau ;
générer la valeur de temps aléatoire sur la base du seuil de temps aléatoire.

**14.** Dispositif d'imagerie selon l'une quelconque des revendications 10 à 13, dans lequel le premier fichier d'image et le second fichier d'image sont générés pour le même objet à inspecter, et représentent différentes propriétés physiques de l'objet, respectivement ; et
dans lequel le premier fichier d'image et le second fichier d'image sont les fichiers suivants de l'objet à inspecter :

un fichier d'image à haute énergie et un fichier d'image à faible énergie ; ou
un fichier d'image CT et un fichier d'image DR ; ou
un fichier d'image de type de matériau et un fichier d'image de coefficient d'atténuation ; ou
un fichier d'image de premier angle de vue et un fichier d'image de second angle de vue.

**15.** Dispositif d'imagerie selon la revendication 10, dans lequel la valeur de temps aléatoire est générée en utilisant un générateur de pseudo nombre aléatoire ou un générateur de véritable nombre aléatoire.

CTRL1 →  ☐ ⌐ 110

⋮ 120

☐ ⌐ 130

→

140 ⌐

☐ ⌐ 150

CTRL2

☐ ⌐ 160

170

CTRL1 ←  ☐ ── ☐ ⌐ 180     ☐ ⌐ 190

**Fig. 1**

<u>180</u>

⌐ 181          ⌐ 182          ⌐ 183

| Memory | ROM | RAM |
| --- | --- | --- |

⌐ 188

⌐ 187

| Input Device | Processor | Display device | Interface unit |
| --- | --- | --- | --- |

184 ──        ── 185        ── 186

**Fig. 2**

S310

SCAN AN OBJECT TO BE INSPECTED TO OBTAIN
FIRST IMAGE BODY DATA AND SECOND IMAGE
BODY DATA ASSOCIATED WITH EACH

S320

CREATE A FIRST IMAGE FILE BASED ON THE FIRST
IMAGE BODY DATA AT A FIRST TIME

S330

GENERATE A RANDOM TIME VALUE

S340

GENERATE A SECOND IMAGE FILE ASSOCIATED
WITH THE FIRST IMAGE FILE BASED ON THE
SECOND IMAGE BODY DATA AT A SECOND TIME,
WHEREIN THE RANDOM TIME VALUE IS RECORDED
IN A FILE HEADER OF THE SECOND IMAGE FILE

**Fig. 3**

401

402

CLK → LFSR

32-bit MUX

403

OR → Output

404

405

CLK → CASE

32-bit MUX

**Fig. 4A**

······ 1 1 1 1 1 1 1 1 1 1

411

| $X_{43}$ | $X_{42}$ | $X_{41}$ | $X_{40}$ | ······ | $X_2$ | $X_1$ |

412

**Fig. 4B**

CA90:

$$\begin{cases} Q_1 = Q_2 \\ Q_i = Q_{i-1} \oplus Q_{i+1} \quad (1<i<n) \\ Q_n = Q_{n-1} \end{cases}$$

CA150:

$$\begin{cases} Q_1 = Q_1 \oplus Q_2 \\ Q_i = Q_{i-1} \oplus Q_i \oplus Q_{i+1} \quad (1<i<n) \\ Q_n = Q_{n-1} \oplus Q_n \end{cases}$$

**Fig. 4C**

501     502     503 RANDOM NUMBER

| NOISE SOURCE | → | PROCESSING CIRCUIT | → | OUTPUT INTERFACE | → |

**Fig. 5**

EP 3 462 407 B1

```
                                           ┌─S610
┌──────────────────────────────────┐
│  CALCULATE THE SIZE OF IMAGE BODY │
│              PORTION              │
└──────────────────────────────────┘
                 │
                 ▼                         ┌─S620
┌──────────────────────────────────┐
│  THE RANDOM POSITION B = C MODULO A │
│           FIXED VALUE S           │
└──────────────────────────────────┘
```

**Fig.6**

```
                                           ┌─S710
┌──────────────────────────────────┐
│  READ A FIRST IMAGE FILE AND A SECOND │
│             IMAGE FILE            │
└──────────────────────────────────┘
                 │
                 ▼                         ┌─S720
┌──────────────────────────────────┐
│  PARSE A GENERATION OF THE FIRST AND │
│    THE SECOND IMAGE FILES AND A   │
│   RANDOM TIME VALUE FROM THE FILE │
│      HEADER OF THE IMAGE FILES    │
└──────────────────────────────────┘
                 │
                 ▼                         ┌─S730
┌──────────────────────────────────┐
│  DETERMINE WHETHER THE FIRST AND  │
│   THE SECOND IMAGE FILES ARE LEGAL│
│  BASED ON THE RANDOM TIME VALUE AND│
│     THE DIFFERENCE BETWEEN THE    │
│   GENERATION TIME OF THE FIRST IMAGE│
│  FILE AND THAT OF THE SECOND IMAGE│
│               FILE                │
└──────────────────────────────────┘
```

**Fig. 7**

17

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2004201751 A1